# FASCICULE DE BREVET EUROPEEN

(11) **EP 0 459 919 B1**
(45) Date de publication et mention de la délivrance du brevet: **23.08.1995**
(21) Numéro de dépôt: 91420166.0
(22) Date de dépôt: 27.05.1991
(51) Int. Cl.: H01H 47/32, H02M 3/156

(54) **Système électrique comprenant un relais électromécanique et un circuit redresseur-abaisseur**
Elektrisches System mit einem elektromechanischen Relais und einem Gleichrichter-Reduktor-Schaltkreis
Electrical system comprising an electromechanical relay and a rectifying step-down circuit

(30) Priorité: 29.05.1990 FR 9006962
(43) Date de publication de la demande: 04.12.1991
(73) Titulaire: SGS-THOMSON MICROELECTRONICS S.A., 94250 Gentilly (FR)
(72) Inventeur: Wuidart, Luc, F-83910 Pourrieres (FR); Bildgen, Marco, F-13090 Aix en Provence (FR)
(74) Mandataire: de Beaumont, Michel

(56) Documents cités:
- GB-A- 2 077 543
- US-A- 3 549 955

## Description

La présente invention concerne des systèmes d'alimentation électrique du type de ceux qui sont couramment utilisés dans des dispositifs électroménagers destinés à être branchés sur le réseau électrique comme, par exemple, des fers à repasser, des cafetières électriques, etc., où la charge est une résistance de chauffage de relativement forte puissance.

Diverses considérations économiques et de dissipation thermique du circuit de commande amènent à choisir pour ces systèmes un relais électromécanique comme moyen pour déterminer le passage ou l'interruption du courant dans la charge, couramment une résistance chauffante. Dans de tels systèmes, il est nécessaire de disposer d'une alimentation continue basse-tension pour alimenter la bobine d'excitation du relais. Cette alimentation basse-tension est également généralement utilisée pour alimenter d'autres composants du circuit. Par exemple, on tend actuellement à introduire dans les appareils électroménagers des microprocesseurs dont le coût est de plus en plus faible pour traiter divers signaux de détection tels que des signaux de court-circuit, de surchauffe, de manque de liquide, etc.

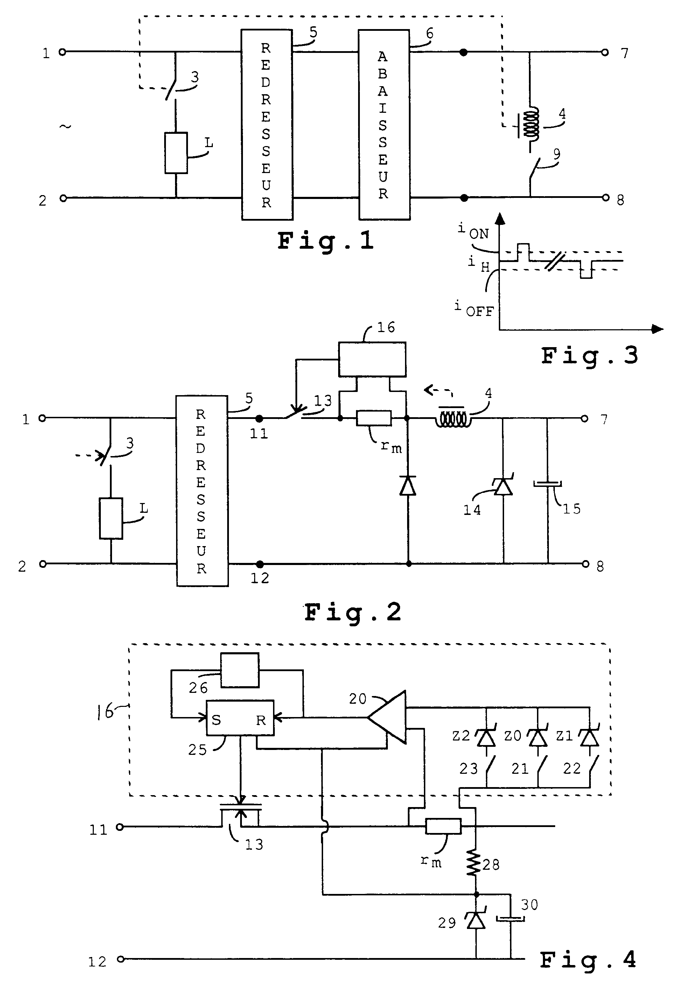

La figure 1 représente une organisation typique d'un circuit de l'art antérieur tel que susmentionné.

Ce circuit comprend entre des bornes 1 et 2 d'un réseau électrique alternatif, une charge L en série avec le commutateur 3 d'un relais commandé par une bobine 4. Les bornes d'alimentation 1 et 2 alimentent également un redresseur 5 dont la sortie redressée alimente un circuit abaisseur 6 ayant des bornes de sortie 7 et 8. Entre ces bornes 7 et 8, se trouvent la bobine d'excitation 4 du relais et un interrupteur 9 susceptible d'être commandé manuellement ou par des signaux en provenance d'un microprocesseur ou autre circuit (non représenté) alimenté par la basse tension continue aux bornes 7 et 8.

La réalisation du circuit abaisseur de tension se heurte à l'un ou l'autre de deux écueils. Ou bien, ce circuit est réalisé de façon entièrement passive et est alors dissipateur de chaleur, ou bien, ce circuit est réalisé avec des éléments actifs pour réduire la dissipation de chaleur et il doit nécessairement comprendre des composants supportant toute la tension redressée du réseau.

Par ailleurs, GB-A-2 077 543 décrit un circuit à commande par relais déjà alimenté par une tension abaissée dans lesquels il est en outre prévu un circuit de type à découpage pour diminuer encore la puissance dissipée dans la bobine en dehors des phases de commutation.

Ainsi, un objet de la présente invention est de prévoir un système électrique du type décrit précédemment dans lequel on puisse notamment réduire le coût du circuit abaisseur, ce circuit présentant néanmoins une faible dissipation thermique.

Pour atteindre cet objet, la présente invention prévoit d'utiliser un circuit abaisseur actif dans lequel la bobine d'excitation du relais est aussi utilisée comme élément constitutif du circuit abaisseur.

Plus précisément, la présente invention prévoit un système dans lequel le circuit redresseur-abaisseur est du type à découpage et utilise comme inductance la bobine d'excitation du relais, celle-ci étant traversée par un courant régulé qui est normalement fixé à la valeur du courant de maintien du relais et qui peut être commuté à un courant supérieur de fermeture ou à un courant inférieur d'ouverture.

Selon un mode de réalisation de la présente invention, le redresseur-abaisseur comprend, à la sortie d'un redresseur, un commutateur fonctionnant en découpage, une résistance de mesure, et ladite bobine connectée à une première borne de sortie, cette première borne de sortie étant reliée à une deuxième borne de sortie par la connexion en parallèle d'une diode zener et d'un condensateur de stockage, un circuit de régulation commandant le rapport cyclique du commutateur de façon à fixer un courant déterminé dans la bobine, le circuit de régulation comprenant des moyens pour fixer ledit courant à la valeur du courant de maintien du relais, à une valeur haute supérieure au courant de fermeture, ou à une valeur basse inférieure au courant d'ouverture.

Ces objets, caractéristiques et avantages ainsi que d'autres de la présente invention seront exposés plus en détail dans la description suivante de modes de réalisation particuliers faite en relation avec les figures jointes parmi lesquelles :
la figure 1, décrite précédemment, illustre l'architecture classique d'un circuit que la présente invention vise à perfectionner ;
la figure 2 représente l'organisation générale d'un circuit selon la présente invention ;
la figure 3 représente les courants à faire circuler dans la bobine d'un relais électromécanique pour commander le commutateur de ce relais ; et
la figure 4 représente un exemple de réalisation du circuit de régulation associé à la présente invention.

La figure 2 représente un mode de réalisation particulier du circuit de la présente invention. On retrouve en figure 2 les bornes 1 et 2 du réseau alternatif, le commutateur de relais 3, la charge L, et le redresseur 5, ce redresseur étant, dans ce cas, réalisé sous forme d'un pont de diodes. Aux bornes de sortie 11 et 12 du redresseur est connecté le circuit selon la présente invention combinant la fonction d'abaisseur et de commande de la bobine d'excitation de relais 4. Comme dans le cas de la figure 1, les bornes de sortie du circuit abaisseur sont désignées par les références 7 et 8.

Le circuit abaisseur de tension est un convertisseur abaisseur à découpage. Il comprend essentiellement un commutateur 13 commuté à haute fréquence, par exemple une centaine de kilohertz, dont la première borne est reliée à la borne 11 et dont la deuxième borne est reliée à la borne de sortie 7 du circuit par l'intermédiaire d'une bobine pour laquelle, selon la présente invention, on utilise la bobine d'excitation 4 du relais. Entre les bornes de sortie 7 et 8, sont disposés en parallèle une diode zener 14 fixant la valeur de la sortie basse tension de l'abaisseur, par exemple 6 ou 12 volts, et un condensateur de stockage 15. La puissance disponible sur les bornes de sortie 7 et 8 est déterminée par le rapport cyclique de conduction du commutateur 13. Ce rapport cyclique est fixé par un circuit de régulation 16 prenant une information sur le courant circulant dans la bobine 4 à l'aide d'une résistance de mesure rₘ.

On notera que la fixation du courant passant dans la bobine de relais 4 détermine l'état d'ouverture ou de fermeture du commutateur de relais 3. En effet, si l'on considère le mode de commande de la bobine 4 en figure 1, on a l'impression, et ceci correspond à l'idée générale de l'utilisateur de relais que la commande de l'ouverture ou de la fermeture du commutateur 3 dépend de la mise sous tension ou hors tension de la bobine 4 sous l'effet de l'interrupteur 9. Il s'agit là en fait du mode de commande le plus courant d'un relais électromécanique. Toutefois, si l'on analyse plus finement le fonctionnement d'un relais, on notera, en se référant à la figure 3, que l'état d'un commutateur de relais dépend en fait du courant passant dans la bobine d'excitation associée. Si le courant est sensiblement égal à un certain courant de maintien i_{H} le relais conserve son état initial. Si le courant dépasse, pendant une durée minimale, une valeur de seuil iₒₙ, le commutateur se ferme et reste fermé jusqu'à ce que le courant devienne inférieur à une valeur de seuil inférieure i_{off}, pendant une durée déterminée.

La présente invention exploite ce mode de commande d'un relais. Le commutateur 13 de la figure 2 est régulé pour que, au repos, le courant dans la bobine 4 soit sensiblement égal à i_{H}. (En fait, la commande haute fréquence du commutateur 13 entraine une ondulation de ce courant autour d'une valeur moyenne i_{H}; il suffit que l'excursion de courant de ces ondulations périodiques reste entre les valeurs iₒₙ et i_{off} ou n'en sorte que brièvement). Ainsi, on prévoit dans le régulateur 16 des moyens pour maintenir à l'état normal le courant dans la bobine à la valeur i_{H} et pour le faire varier temporairement au-dessus ou en dessous des valeurs de déclenchement supérieure et inférieure quand on veut modifier l'état du relais.

Un mode de réalisation simplifié du régulateur 16 est représenté schématiquement en figure 4 dans laquelle on retrouve les bornes de sortie 11 et 12 du redresseur 5, le commutateur 13 réalisé sous la forme d'un transistor MOS à canal N, et la résistance rₘ.

La tension aux bornes de la résistance rₘ est comparée dans un comparateur 20 à l'une ou l'autre de trois tensions de référence fixées par des diodes zener Z₀, Z₁ et Z₂. La diode zener Z₀ correspond à une tension telle que le courant dans la résistance rₘ est de l'ordre de i_{H}. La diode zener Z₁ correspond à une tension telle que le courant dans la résistance rₘ est inférieur à i_{off}. La diode zener Z₂ correspond à une tension telle que le courant dans la résistance rₘ est supérieur à iₒₙ. L'une ou l'autre de ces diodes est mise en action sous l'effet d'interrupteurs 21, 22 et 23, l'interrupteur 21 étant normalement fermé et l'interrupteur 22 ou l'interrupteur 23 étant fermé tandis que l'interrupteur 21 est ouvert quand on veut commuter le commutateur 3 du relais à l'ouverture ou à la fermeture.

La sortie de l'amplificateur 20 commande l'entrée R d'une bascule RS 25 dont l'entrée S est reliée à l'entrée R par l'intermédiaire d'un circuit monostable 26. La sortie de la bascule RS commande la grille du transistor MOS 13. Si l'on considère que le transistor MOS 13 s'ouvre quand un signal apparaît sur l'entrée R de la bascule, et qu'il reste ouvert jusqu'à ce qu'un signal apparaisse sur l'entrée S, alors, cette durée d'ouverture est constante et fixée par la durée du circuit monostable 26. Cette durée déterminera l'ordre de grandeur de la période d'ouverture et de fermeture du commutateur 13.

Pour que le régulateur fonctionne à l'état initial, quand on vient de brancher l'ensemble du système aux bornes du réseau, il convient d'alimenter initialement la bascule RS et le comparateur 20. Pour cela, on pourra utiliser un circuit tel que celui illustré dans la partie inférieure droite de la figure 4 entre les bornes 11 et 12. Ce circuit comprend la connexion en série d'une résistance 28 et d'une diode zener 29, cette dernière étant montée en parallèle sur un condensateur 30. On attend de ce circuit d'initialisation seulement l'énergie nécessaire à l'alimentation de circuits du type d'une bascule RS et d'un comparateur. On pourra également prévoir que, une fois que le système est initialisé, c'est la tension continue disponible sur les bornes 7 et 8 qui se substitue à la tension aux bornes du condensateur 30.

L'homme de l'art notera que les modes de réalisation de l'invention décrits en relation avec les figures 2 et 4 ne constituent que des exemples de mises en oeuvre possibles. Dans le cas de la figure 2, d'autres systèmes sont connus pour servir d'abaisseurs de tension dans lesquels l'élément principal est une inductance. Dans le cas de la figure 4, de nombreux circuits sont connus pour assurer la fonction de régulation. Un exemple d'un tel circuit est le circuit intégré disponible sous la référence UC3842 auprès de la société SGS-Thomson.

D'autre part, comme commutateurs 22 et 23 déterminant un ordre de fermeture ou d'ouverture du relais, on pourra utiliser de simples interrupteurs à bouton poussoir dont la durée de fermeture est déterminée par leur durée d'actionnement, ou bien des commutateurs associés à des circuits pour fournir des ordres de fermeture de durée déterminée. En outre, il conviendra de prévoir que ces commutateurs peuvent également être commandés par un signal électrique tel que celui fourni par un microprocesseur gérant diverses informations relatives au système.

L'homme de l'art pourra également prévoir des montages dans lesquels les fonctions de redressement et d'abaissement ne sont pas séparées.

## Revendications

1. Système alimenté par la tension alternative du réseau comprenant un relais électromécanique pour commander une charge (L) connectée sur le réseau et un circuit redresseur-abaisseur comprenant des bornes (7, 8) de fourniture de tension continue, dans lequel le circuit redresseur-abaisseur est du type à découpage et utilise comme inductance la bobine d'excitation (4) du relais, celle-ci étant traversée par un courant régulé qui est normalement fixé à la valeur du courant de maintien du relais et qui peut être commuté à un courant supérieur de fermeture ou à un courant inférieur d'ouverture.

2. Système selon la revendication 1, caractérisé en ce que le redresseur-abaisseur comprend, à la sortie d'un redresseur (5), un commutateur fonctionnant en découpage (13), une résistance de mesure (rₘ), et ladite bobine (4) connectée à une première borne de sortie (7), cette première borne de sortie étant reliée à une deuxième borne de sortie (8) par la connexion en parallèle d'une diode zener (14) et d'un condensateur de stockage (15), un circuit de régulation (16) commandant le rapport cyclique du commutateur (13) de façon à fixer un courant déterminé dans la bobine (4), le circuit de régulation comprenant des moyens pour fixer ledit courant à la valeur du courant de maintien du relais, à une valeur haute supérieure au courant de fermeture (iₒₙ), ou à une valeur basse inférieure au courant d'ouverture (i_{off}).

## Patentansprüche

1. System, welches mit der Wechselspannung des Netzes versorgt wird, mit einem elektromechanischen Relaisschalter zum Steuern einer Last (L), die mit dem Netz verbunden ist, und einer Gleichrichter/Abwärtswandler-Schaltung mit Anschlüssen (7, 8) zum Vorsehen einer Gleichspannung, wobei die Gleichrichter/Abwärtswandler-Schaltung in einem Schaltmodus arbeitet und die Erregerspule (4) des Relaisschalters als eine Induktivität verwendet, wobei die Spule (4) mit einem geregelten Strom gespeist wird, der normalerweise auf den Wert des Haltestroms des Relaisschalters festgesetzt ist und der auf einen höheren Einschaltwert oder einen niedrigeren Ausschaltwert umgeschaltet werden kann.

2. System nach Anspruch 1, bei dem die Gleichrichter/Abwärtswandler-Schaltung am Ausgang eines Gleichrichters (5) folgende Merkmale aufweist: einen Zerhackerschalter (13), einen Meßwiderstand (rₘ) und die Spule (4), die mit einem ersten Ausgangsanschluß (7) verbunden ist, wobei der erste Ausgangsanschluß mit einem zweiten Ausgangsanschluß (8) über die Parallelschaltung einer Zenerdiode (14) und eines Speicherkondensators (15) verbunden ist, und wobei eine Regelschaltung (16) den Arbeitszyklus des Schalters (13) steuert, um einen ausgewählten Strom in der Spule (4) festzulegen, und die Regelschaltung eine Vorrichtung zum Festlegen des Stromes bei dem Wert des Haltestromes des Relaisschalters, bei einem hohen Wert, der größer ist als der Einschaltstrom (iₒₙ), oder bei einem niedrigen Wert, der kleiner ist als der Ausschaltstrom (i_{off}), aufweist.

## Claims

1. A system fed by the a.c. voltage of the mains comprising an electromechanic relay switch for controlling a load (L) connected to the mains and a rectifying/step-down circuit including terminals (7, 8) for providing a d.c. voltage, wherein the rectifying/step-down circuit operates in a switching mode and uses as an inductor the excitation coil (4) of the relay switch, said coil (4) being fed by a regulated current which is usually fixed at the value of the hold current of the relay switch, and that can be switched to a higher switching-on value or to a lower switching-off value.

2. The system of claim 1, wherein the rectifying/step-down circuit comprises, at the output of a rectifier (5), a chopper switch (13), a measurement resistor (rₘ), and said coil (4) connected to a first output terminal (7), said first output terminal being connected to a second output terminal (8) through the parallel connection of a zener diode (14) and a storage capacitor (15), a regulation circuit (16) controlling the duty cycle of the switch (13) to fix a selected current in the coil (4), the regulation circuit comprising means for fixing said current at the value of the hold current of the relay switch, at a high value higher than the switching-on current (iₒₙ), or at a low value lower than the switching-off current (i_{off}).
